# EUROPÄISCHE PATENTSCHRIFT

(11) **EP 3 419 807 B1**
(45) Veröffentlichungstag und Bekanntmachung des Hinweises auf die Patenterteilung: **10.03.2021**
(21) Anmeldenummer: 17716790.5
(22) Anmeldetag: 10.04.2017
(51) Int. Cl.: B29C 49/64, B29C 49/42, B29C 49/06

(54) **HEIZVORRICHTUNG ZUR THERMISCHEN KONDITIONIERUNG VON FÜR DIE BLASFORMUNG VORGESEHENEN VORFORMLINGEN**
HEATING DEVICE FOR THERMALLY CONDITIONING PREFORMS PROVIDED FOR BLOW MOLDING
DISPOSITIF DE CHAUFFAGE POUR LE CONDITIONNEMENT THERMIQUE DE PRÉFORMES DESTINÉES AU MOULAGE PAR SOUFFLAGE

(30) Priorität: 29.04.2016 DE 102016005272
(43) Veröffentlichungstag der Anmeldung: 02.01.2019
(73) Patentinhaber: KHS Corpoplast GmbH, 22145 Hamburg (DE)
(72) Erfinder: KLATT, Dieter, 22147 Hamburg (DE); BAUMGARTE, Rolf, 22926 Ahrensburg (DE); MEYER, Jan Fabian, 22337 Hamburg (DE); LEWIN, Frank, 22889 Tangstedt (DE); LINKE, Michael, 22159 Hamburg (DE); GERHARDS, Martin, 22089 Hamburg (DE); GODAU, Günther, 22145 Hamburg (DE)
(74) Vertreter: Eisenführ Speiser
(86) Internationale Anmeldenummer: PCT/EP2017/000456
(87) Internationale Veröffentlichungsnummer: WO 2017/186340

(56) Entgegenhaltungen:
- EP-A2- 0 920 974
- WO-A2-2007/065392
- FR-A1- 2 874 193
- US-A- 5 292 243
- US-A- 5 498 152
- US-A1- 2003 020 193

## Beschreibung

Die Erfindung betrifft eine Heizvorrichtung zur thermischen Konditionierung von für die Blasformung vorgesehenen Vorformlingen nach dem Oberbegriff des Anspruchs 1 und eine Blasmaschine nach Anspruch 12.

Generell geht es um das Problem des Preferential Heating, also um die ungleichmäßige Temperierung von Vorformlingen in deren Umfangsrichtung. Eine derartige ungleichmäßige Temperierung mit stärker erwärmten Umfangsbereichen und mit weniger stark erwärmten Umfangsbereichen wird beispielsweise angewendet, wenn aus den Vorformlingen Behälter hergestellt werden sollen, deren Querschnitt von einer kreisrunden Form abweicht. Die Abweichung kann beispielsweise darin bestehen, dass Behälter mit ovalem Querschnitt oder beispielsweise mit dreieckigem oder viereckigem Querschnitt produziert werden sollen.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizvorrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE 43 40 291 A erläutert. Die Erfindung betrifft aber auch in gleicher Weise die Blasformung mittels anderer Medien als Druckluft, insbesondere auch die Verwendung eines Füllgutes als Blasfluid.

Der grundsätzliche Aufbau einer Blasstation zur Behälterformung wird in der DE 42 12 583 A1 beschrieben. Möglichkeiten zur Temperierung der Vorformlinge werden in der DE 23 52 926 A1 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen. Für eine Temperierung haben Transportdorne Vorteile, die in den inneren Mündungsbereich eines Vorformlinges klemmend eingreifen, da die Vorformlinge für eine Temperierung frei zugänglich sind.

Eine Handhabung von Behältern unter Verwendung von Übergaberädern wird beispielsweise in der DE 199 06 438 A1 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgussverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgusstechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Die Herstellung der eingangs erwähnten unrunden Behälter wird bereits in der US 3,775,524 beschrieben. Es erfolgt zunächst eine symmetrische Temperierung der Vorformlinge, anschließend wird die Temperatur in ausgewählten Bereichen selektiv erhöht. Weitere Varianten zur Herstellung von Temperaturprofilierungen in Umfangsrichtung des Vorformlings werden ebenfalls in der US 3,632,713, der US 3,950,459 sowie der US 3,892,830 beschrieben. Eine Temperaturkonditionierung durch selektive Abschattung wird in der DE 33 14 106 A1 angegeben.

Aus der US 5,292,243 ist es bekannt, gleichzeitig zwei Vorformlinge einer Temperaturkonditionierung in Umfangsrichtung zu unterziehen. In der EP 0 620 099 B1 und der inhaltsgleichen DE 694 01 024 T2 findet sich eine Zusammenstellung von aus dem Stand der Technik bekannten Verfahren zur Temperaturkonditionierung von Vorformlingen.

Weiterhin ist im Stand der Technik bekannt, einen Vorformling zunächst in einem ersten Heizungsabschnitt einer Heizvorrichtung in Umfangsrichtung homogen zu erwärmen und anschließend in einem zweiten Heizungsabschnitt in Umfangsrichtung das gewünschte Temperaturprofil zu erzeugen. Einen solchen Stand der Technik zeigt die WO 97/32713 mit einem schrittweise arbeitenden Rotationsantrieb für die Vorformlinge. Die US 5,853,775, deren Lehre den Oberbegriffen der unabhängigen Ansprüche entspricht, offenbart hierzu eine ebenfalls schrittweise umlaufende Transportkette mit einer Vielzahl von Vorformlingen tragenden Kettengliedern in Form von Transportdornen. In einer ersten Heizstation erfolgt zunächst eine homogene Erwärmung der Vorformlinge und in einer der ersten Station gegenüberliegenden zweiten Heizstation erfolgt eine in Umfangsrichtung ungleichmäßige Erwärmung der Vorformlinge. In beiden Heizstationen werden die Vorformlinge mittels einer nur den Heizstationen zugeordneten Kette gedreht.

Die DE 10 2007 016 027 A1 lehrt eine Vorrichtung für das Preferential Heating, bei der eine Drehbewegung der Vorformlinge von einem Profilstrang erzeugt wird, der mit einem Zahnrad des Transportmittels zusammenwirkt, das den Vorformling durch die Heizstrecke trägt und das gemeinsam mit weiteren Transportmitteln zu einer umlaufenden Transportkette verbunden ist. Der Profilstrang läuft beabstandet von der Transportkette um die Heizstrecke um und kämmt mit dem Zahnrad des Transportmittels. Dabei wird der Profilstrang mit konstanter oder variierender Umlaufgeschwindigkeit angetrieben.

Besondere Anforderungen ergeben sich, wenn nicht nur ein unrunder Behälter blasgeformt werden soll, sondern wenn auch noch der auf den Behälter aufzuschraubende Verschluss in einer bestimmten Orientierung relativ zum Behälter stehen soll, wie dies z.B. bei unrunden Sprühflaschen der Fall ist. Hierfür ist Voraussetzung, dass das an dem Vorformling bereits fertig ausgebildete Gewinde für den aufzuschraubenden Verschluss stets in einer gleichen, nämlich in der gewünschten Positionierung in Umfangsrichtung vorliegt, bevor der Vorformling mit dem für das Blasformen benötigten in Umfangsrichtung inhomogenen Temperaturprofil versehen wird, damit nach der Temperaturkonditionierung des Vorformlings die Sollausrichtung des Gewindes mit der Solltemperaturkonditionierung des Vorformlings korrespondiert. Nur so ist sichergestellt, dass nach der Blasformung des Behälters der aufzuschraubende Verschluss in der gewünschten Orientierung zum unrunden Behälter steht.

Bezüglich der Vorformlingsausrichtung ist bekannt, diese z.B. auf Transportdorne anzuordnen, und die Transportdorne beim Einlauf in die Heizstrecke auszurichten, z.B. anhand von an den Transportdornen ausgebildeten Vorsprüngen, die mit einer stationären Ausrichtführung zusammenwirken, an der der Transportdorn auf seinem Transportweg entlangläuft. Ein solcher Stand der Technik ist z.B. in der WO 99/33635 A1 gezeigt. Allerdings ist dadurch noch nicht gewährleistet, dass auch der Vorformling in der gewünschten Gewindeausrichtung auf dem Dorn orientiert ist.

Aufgabe der vorliegenden Erfindung ist es daher, eine Vorrichtung der einleitend genannten Art anzugeben, die in einfacher Weise die Möglichkeit zur gewünschten Umfangspositionierung der Vorformlinge bereitstellt.

Diese Aufgabe wird erfindungsgemäß dadurch gelöst, dass die Sperrelemente entweder an den kettenartig verbundenen Transportmitteln angeordnet sind oder an einer zwischen dem ersten und dem zweiten Heizabschnitt angeordneten Sperreinrichtung, die aus mehreren insbesondere kettenartig verbundenen Sperrelementen zusammengesetzt ist, die in einem Ausrichtabschnitt des Transportweges parallel zur Transportkette geführt sind und die in diesem Abschnitt in die Ausrichtkontur eingreifend ausgebildet und angeordnet sind.

Mit der erfindungsgemäßen Lösung wird erreicht, dass z.B. keinerlei Modifikationen an der Transportkette vorzunehmen sind. Eine Änderung von Maschinenelementen oder Heizvorrichtungsbauteilen zur Realisierung der Erfindung ist nur bei produktabhängigen Teilen erforderlich, wodurch die technische Umsetzung kostengünstig und mit geringem Umbauaufwand erfolgen kann.

Weitere vorteilhafte Ausgestaltungen der Erfindung sind in den Unteransprüchen angegeben.

Zur Ausrichtung des Vorformlings wird dieser in Drehung versetzt. Grundsätzlich könnte zur Ausrichtung des Vorformlings dieser selber aktiv in Drehung versetzt werden. Da Vorformlinge materialeinsatzoptimiert und mit möglichst geringem Materialaufwand hergestellt sind, erweist es sich als vorteilhaft, wenn die Drehung des Vorformlings erfolgt, indem das Transportmittel gedreht wird, das den Vorformling trägt. Ein Sperrelement eines Ausrichtmittels greift bei Erreichen einer Sollausrichtposition in eine Ausrichtkontur des Vorformlings ein, wodurch ein Weiterdrehen des Vorformlings verhindert wird, während das Transportmittel z.B. weiterdreht. Geeignete Ausrichtkonturen auf dem Vorformling können z.B. speziell beim Spritzgießen vorgesehen werden, z.B. eine Ausrichtnut oder ein Ausrichtnocken.

Es ist aber auch möglich, dass das Gewinde im Mündungsabschnitt des Vorformlings die Ausrichtkontur bildet, in das das Sperrelement eingreift und ein Weiterdrehen des Vorformlings verhindert, sobald das Sperrelement in Anlage zu einer vorbestimmten Anlagefläche im Gewinde gelangt. Insbesondere erweist es sich bei Standardgewinden als vorteilhaft, als Anlagefläche die venting slots zu verwenden. Es erweist sich auch als vorteilhaft, alternativ oder zusätzlich den Gewindeauslauf oder den Gewindeeinlauf als Anlagefläche zu verwenden. Der Begriff des Standardgewindes umfasst Vorformlingsgewinde mit einer zylindrischen Grundform, auf denen sich die Gewindegrate als Erhebungen radial nach außen erstrecken. Die Gewindegrate weisen Kantenflächen quer zum Gratverlauf auf, also in Richtung der Längsachse des Vorformlings. Solche Kanten in den Gewindezügen von Standardgewinden sind z.B. der Gewindeeinlauf, der Gewindeauslauf oder sogenannte venting slots, die sich fluchtend über mehrere Gewindezüge hinweg erstrecken. Nicht als Standardgewinde werden solche Gewinde angesehen, in denen allein zu Ausrichtzwecken Modifikationen vorgenommen werden zur Schaffung von Ausrichtstrukturen. Natürlich sind auch diese für die Verwirklichung der Erfindung geeignet.

Es ist denkbar, dass für den Zugang zu der Ausrichtstruktur ein Absenken oder Anheben des Vorformlings erforderlich ist, z.B. weil eine Mündungsabschirmung hinderlich wäre. Entsprechend wären im Ausrichtbereich des Transportweges Absenk- oder Anhebemittel anzuordnen, um die gewünschte Absenkung oder das gewünschte Anheben zu realisieren.

Insbesondere ist daran gedacht, dass das Transportmittel ausgerichtet wird und auch der Vorformling ausgerichtet wird. Wenn beide die gewünschte ausgerichtete Position eingenommen haben, können die beiden zum Beispiel lagestabil miteinander verbunden werden, wie dies zum Beispiel durch übliche Klemmdorne bekannt ist. Die gewollte Ausrichtung des Gewindes korreliert dann mit der Ausrichtung des Transportmittels, so dass dann in nachfolgenden Behandlungsschritten die Ausrichtung des Transportmittels auch die Ausrichtung des Vorformlings bedingt. So kann zum Beispiel anhand der Ausrichtung des Transportmittels ein Einsetzen in eine Blasstation in gewünschter Ausrichtung erfolgen, ohne dass hierzu erneut auf die Ausrichtung des Vorformlings zu achten ist. Insbesondere ist auch möglich, dass der Transportdorn oder das sonstige Transportmittel zusammen mit dem Vorformling in die Blasstation eingesetzt wird.

Einfache geometrische Verhältnisse liegen dann vor, wenn die Transportkette über voneinander beabstandet angeordnete Umlenkräder geführt ist zur Bildung gekrümmter Umlaufabschnitte im Bereich der Umlenkräder und linearer Umlaufabschnitte in den dazwischenliegenden Bereichen, wobei die Heizeinrichtungen in den linearen Umlaufabschnitten angeordnet sind. Insbesondere ist dadurch auch der Ausrichtbereich in den linearen Umlaufabschnitten angeordnet, und sowohl die Bewegung der Transportmittel als auch die der Sperrelemente ist dadurch leichter beherrschbar.

Wenn der Mündungsbereich der Vorformlinge durch Mündungsschirme gegen Überhitzung geschützt ist, die mit Befestigungsmitteln an den Transportmitteln befestigt sind und mit diesen umlaufen, sind die Sperrelemente mit Vorteil eng benachbart zu den Ausrichtkonturen angeordnet, indem sie an den Mündungsschirmen oder an den Befestigungsmitteln angeordnet werden. Es ergibt sich dadurch auch nur die Notwendigkeit kurzer Verfahrwege für die Sperrelemente.

Eine einfache und kostengünstige Konstruktion ist dadurch erreichbar, dass jedes Transportmittel einen Mündungsschirm trägt, der in Bewegungsrichtung und entgegen seiner Bewegungsrichtung jeweils eine halbkreisförmige Ausnehmung aufweist, wobei jeder Mündungsschirm zusammen mit seinem vorauslaufenden Mündungsschirm und zusammen mit seinem nachlaufenden Mündungsschirm jeweils einen dazwischen angeordneten Vorformling umgreift, wobei die Sperrelemente randseitig, bevorzugt endständig, an einer Ausnehmung angeordnet sind, wobei die Sperrelemente so angeordnet und dimensioniert sind, dass sie mit der Ausrichtstruktur des Vorformlings in Eingriff gelangt, wenn das Transportmittel im Bereich der gekrümmten Umlaufabschnitte umläuft, wobei der Mündungsschirm insbesondere zweigeteilt ausgeführt ist, und jeder der beiden Teile eine der beiden Ausnehmungen aufweist, insbesondere wobei das das Sperrelement aufweisende Teil federnd verschwenkbar an dem anderen Teil gelagert ist. Der Änderungsbedarf bei einer Umstellung auf preferential heating beschränkt sich dadurch einzig auf die Mündungsabschirmung und die Schwenkbewegung der Sperrelemente erfolgt automatisch in den gekrümmten Umlaufabschnitten aufgrund der auf unterschiedlichen Radien laufenden Abschnitte.

Auch die schwenkbare Lagerung der Sperrelemente an den Befestigungsmitteln bringt den Vorteil einer geringen Entfernung zu der Ausrichtkontur am Vorformling und einfacher Bewegungsmuster und Betätigungsmuster für das Auslösen und Kontrollieren der Schwenkbewegung.

Bei mit der Transportkette bewegungssynchronisiert mitlaufenden Sperrelementen einer Sperreinrichtung lassen sich Antriebe und Synchronisierungserfordernisse vermeiden, indem wenigstens ein Koppelelement der Sperreinrichtung zur Bewegungskopplung in koppelnden Eingriff mit den Transportmitteln verfahrbar ist. Mit Vorteil erfolgt dies insbesondere kurvengesteuert, da kurvengesteuerte Positionierbewegungen sich durch hohe Positioniergenauigkeit und Reproduzierbarkeit auszeichnen. Um den Dornantriebsriemen oder andere Antriebsmittel von der Transportkette wegführen zu können zum Zwecke verbesserter Zugänglichkeit zu den Vorformlingen besteht die Sperreinrichtung bevorzugt aus zwei in vertikaler Richtung zueinander beabstandet angeordneten Ketteneinheiten, die bewegungsgekoppelt ausgeführt sind und zwischen denen hindurch das Antriebselement weg von der Transportkette geführt ist.

Aus den im Stand der Technik bekannten Transportmitteln werden Klemmdome als besonders geeignet für die vorliegende Erfindung angesehen, insbesondere solche Klemmdorne, die innen in den Mündungsbereich des Vorformlings klemmend eingreifen.

Die Drehung des gesperrten Vorformlings auf einem rotierenden Klemmdorn wird dadurch unterstützt, dass im Ausrichtbereich des Transportweges die Klemmkraft des Klemmdornes zumindest teilweise lösende Mittel vorgesehen sind. Es handelt sich dabei insbesondere um Betätigungen für Klemmdorne mit aktiver oder passiver Klemmfunktion. In diesem Bereich werden mit Vorteil mitlaufende und/oder stationäre Führungen als Auflageflächen für die Vorformlinge angeordnet, z.B. mit den Vorformlingen mitlaufende Stütztaschen, insbesondere für den Stützring der Vorformlinge. Die Gefahr, dass sich Vorformlinge von den Transportmitteln versehentlich ablösen und in die Heizvorrichtung fallen, wird dadurch ausgeschlossen, und die Vorformlinge werden sicher auf einer definierten Höhe gehalten für Sperreingriffe oder dergleichen.

Für den Drehantrieb der Transportmittel haben sich Zahnräder als der Drehantriebskörper bewährt, die z.B. weitgehend schlupf- und spielfrei mit Zahnriemen als Antriebselement zusammenwirken. Ein weiterer Vorteil ist ein geringer Verschleiß.

Für einen gewissen vorteilhaften Spiel- und Toleranzausgleich sorgen federnd ausgebildete Sperrelemente.

Für eine flexible Verwendbarkeit auch bei Anwendungen ohne Preferential Heating ist es vorteilhaft, wenn die Sperrelemente aus einer Eingriffsstellung, in der die Sperrelemente mit der Ausrichtkontur in Eingriff gelangen können, in eine Ruhestellung verfahrbar sind, in der die Sperrelemente nicht mit der Ausrichtkontur in Eingriff gelangen können, wobei die Sperrelemente insbesondere kurvengesteuert verfahrbar ausgeführt sind, wobei insbesondere beide Stellungen als federbelastete Endlagen ausgebildet sind.

Die Erfindung betrifft auch eine Blasmaschine mit einer Heizvorrichtung nach den vorstehend beschriebenen Merkmalen und Eigenschaften.

In Verbindung mit den nachfolgenden Figuren soll die Erfindung näher erläutert werden anhand von Ausführungsbeispielen der Erfindung. Es zeigen:
- Fig. 1: eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine Skizze zu einem ersten Ausführungsbeispiel der vorliegenden Erfindung in einer Aufsicht,
- Fig. 5: eine Seitenansicht zu einem zweiten Ausführungsbeispiel der Erfindung,
- Fig. 6: ein Beispiel für ein Transportmittel mit einem davon gehalterten Vorformling,
- Fig. 7a bis Fig. 7d: perspektivische Ansichten zu beispielhaften Details des Ausführungsbeispiels der Figur 5,
- Fig. 8: weitere perspektivische Ansichten zu anderen beispielhaften Details des Ausführungsbeispiels der Figur 5,
- Fig. 9: eine weitere Ausführungsvariante erfindungsgemäßer Ausrichtmittel, und
- Fig. 10a und 10b: weitere Ausführungsbeispiele für erfindungsgemäße Ausrichtmittel.

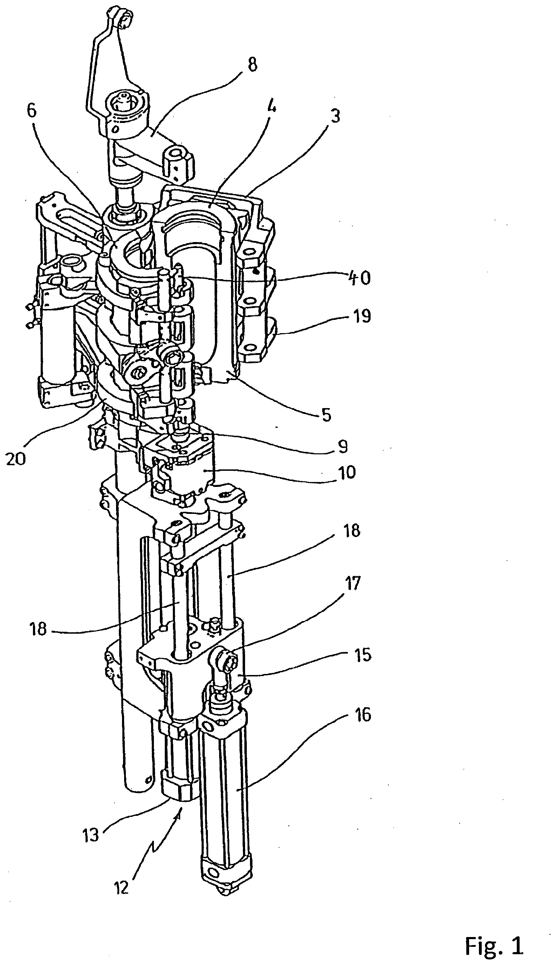

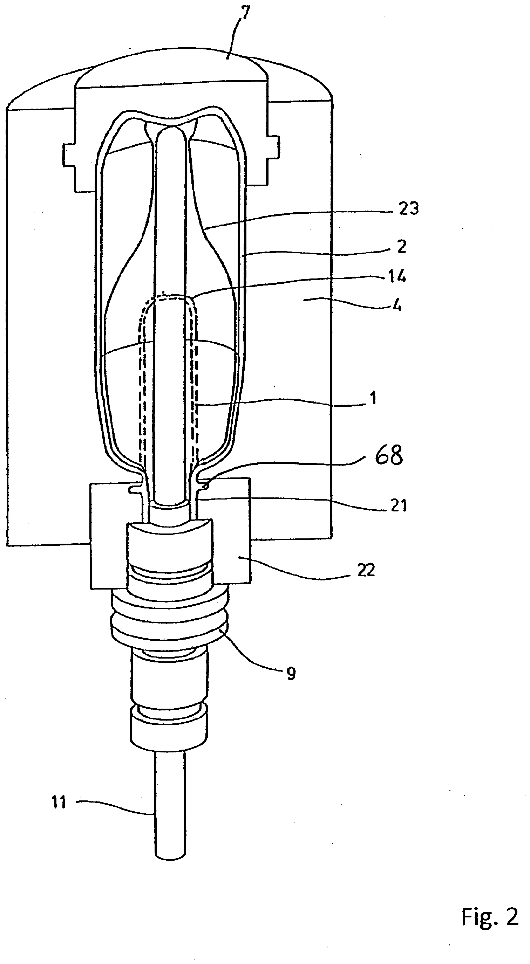

Der prinzipielle Aufbau einer Vorrichtung zur Umformung von Vorformlingen (1) in Behälter (2) ist in den Fig. 1 und in Fig. 2 dargestellt. Anhand dieser Figuren soll lediglich in grundsätzlicher Art der Prozess der Blasformung von Behältern (2) aus Vorformlingen (1) erläutert werden.

Die dargestellte Vorrichtung zur Formung des Behälters (2) besteht im Wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat (PET) sein. Zur Ermöglichung eines Einsetzens des Vorformlings (1) in die Blasform (4) und zur Ermöglichung eines Herausnehmens des fertigen Behälters (2) besteht die Blasform (4) typischerweise aus Formhälften (5, 6) und aus einem Bodenteil (7), das von einer Hubvorrichtung (8) positionierbar ist, nämlich im vorliegenden Beispiel absenk- und anhebbar. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen. Im gezeigten Beispiel erfolgt die Blasformung von mit Mündung nach unten weisend eingesetzten Vorformlingen. Ebenso üblich sind Blasstationen, in die Vorformlinge mit nach oben gerichteter Mündung eingesetzt werden.

Zur Ermöglichung einer Druckluftzuleitung ist unterhalb des Transportdornes (9) ein Anschlusskolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Im Stand der Technik auch bekannt sind Reckstangen mit linearmotorischem Antrieb.

Bei der in Fig. 1 dargestellten Ausführungsform ist das Recksystem derart ausgebildet, dass eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, dass von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

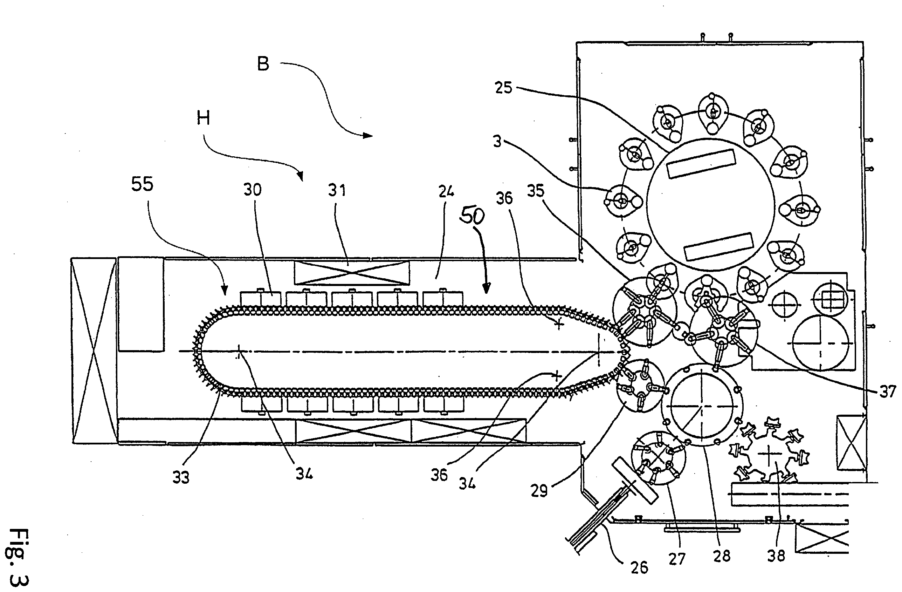

Fig. 3 zeigt zum allgemeinen Verständnis des technischen Umfeldes der Erfindung den grundsätzlichen Aufbau einer Blasmaschine (B), die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die z.B. wie zu den Figuren 1 und 2 erläutert ausgebildeten Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, dass der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Pressluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im Wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34), das Kopfrad, und im Bereich von benachbarten Umlenkungen zwei vergleichsweise kleiner dimensionierte Umlenkräder (36) verwendet. Grundsätzlich sind aber auch beliebige andere Heizstreckenkonturen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Umlaufabschnitten der Heizstrecke (24) und das größere Umlenkrad (34, Kopfrad) im unmittelbaren Übergabebereich zum Übergaberad (29) und zum Eingaberad (35). Alternativ zur Verwendung von kettenartig verbundenen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

Die in Figur 3 dargestellte Heizstrecke (24) kann z.B. durch das Vorsehen einer größeren Anzahl von Heizstrahlern (30) modifiziert werden, um z.B. eine größere Menge von Vorformlingen (1) je Zeiteinheit temperieren zu können. Die Gebläse (31) können z.B. Kühlluft in den Bereich von Kühlluftkanälen einblasen, die zugeordneten Heizstrahlern (30) jeweils gegenüberliegen und über Ausströmöffnungen die Kühlluft abgeben. Durch die Anordnung der Ausströmrichtungen kann eine Strömungsrichtung für die Kühlluft im Wesentlichen quer zu einer Transportrichtung der Vorformlinge (1) realisiert werden. Die Kühlluftkanäle können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

Die vorstehend geschilderten Heizstrahler (30) sind ebenfalls lediglich als Beispiele für verwendbare Heizeinrichtungen zu verstehen. Es sind im Stand der Technik eine Vielzahl alternativer Konstruktionen bekannt, z.B. als Heizräder ausgebildete Konstruktionen mit Einzelplatzbeheizung. Es sind im Stand der Technik auch andere Heizverfahren bekannt, z.B. Beheizung der Vorformlinge durch Mikrowellenbestrahlung. Die Erfindung ist unabhängig vom konkreten Aussehen der Heizeinrichtungen.

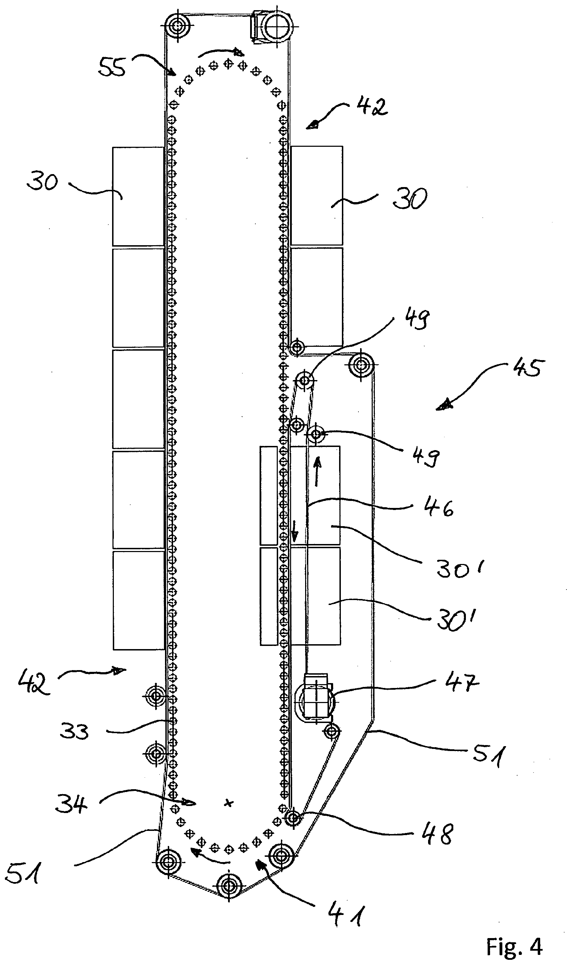

Fig. 4 zeigt in einer Ansicht von oben ähnlich zu der in Fig. 3 gezeigten Ansicht eine erfindungsgemäße Heizvorrichtung (H). Die aus mehreren Transportmitteln (33) zusammengesetzte umlaufende Transportkette (50) ist durch einzelne Kettenglieder angedeutet. Diese Kette (50) wird über nicht näher dargestellte Umlenkräder (siehe z.B. Fig. 3) umgelenkt und hat im Bereich dieser Umlenkungen gekrümmten Umlaufabschnitte (41) und dazwischen liegend lineare Umlaufabschnitte (42). Die Vorformlingseingabe in die Heizvorrichtung (H) erfolgt im Bereich des mit Bezugszeichen (34) angedeuteten Kopfrades. In der Darstellung der Fig. 4 ist dieses Kopfrad (34) am unteren Bildende angeordnet, während in der Darstellung der Fig. 3 das Kopfrad am oberen Ende der Heizvorrichtung (H) angeordnet ist. In Fig. 4 sind die entsprechendem Übergaberäder zur Übergabe von Vorformlingen in die Heizvorrichtung (H) und zur Entnahme der temperierten Vorformlinge nach einem vollständigen Durchlaufen der Heizvorrichtung (H) über einen fast kompletten Umlauf der Transportkette (50) nicht gezeigt.

Im linken linearen Umlaufabschnitt (42) der Fig. 4 sind mehrere Heizeinrichtungen (30) vorgesehen. Typische Heizeinrichtungen (30) sind zum Beispiel als Heizkästen aufgebaut mit darin aufgenommenen Heizstrahlern. In der Regel sind in dieser Heizeinrichtung (30) mehrere im Wesentlichen horizontal verlaufende, Heizstrahlung emittierende, linienförmige Heizröhren angeordnet, die über die Vorformlingslänge verteilt übereinander angeordnet sind. Diese Heizstrahler sind in der Regel auf einer Seite des Heizkastens angeordnet und auf einer gegenüberliegenden Seite des Heizkastens ist in der Regel ein Reflektor angeordnet, der mit einem hohen Reflektionsvermögen für die verwendete Heizstrahlung ausgeführt ist. In den zwischen den Heizstrahlern und dem Reflektor gebildeten tunnelartigen Raum werden die Vorformlinge (1) hindurchgeführt von den Transportmitteln (33). Dabei werden die Vorformlinge (1) kontinuierlich bewegt und kontinuierlich in Umfangsrichtung um ihre Längsachse gedreht, um eine möglichst gleichmäßige Beheizung über den Umfang der Vorformlinge (1) zu gewährleisten. In Achsrichtung des Vorformlings (1) kann ebenfalls eine gleichmäßige Temperierung erfolgen. Es ist aber auch möglich, dass bestimmte Höhenbereiche des Vorformlings (1) auf eine höhere oder eine niedrigere Temperatur gebracht werden als andere Höhenbereiche. Fig. 4 zeigt im linken Bildbereich fünf nebeneinander angeordnete Heizkästen, wobei diese Zahl rein beispielhaft ist.

Auf dem gegenüberliegenden linearen Umlaufabschnitt (42) der Heizstrecke (24) befinden sich ebenfalls Heizeinrichtungen (30, 30'). Die beiden auf ihrem Transportweg (55) von den Vorformlingen (1) zuerst durchlaufenen Heizkästen (30) auf diesen Teil der Heizstrecke (24) sind baugleich zu den vorab beschriebenen Heizkästen (30) für die gleichmäßige Umfangstemperierung der Vorformlinge (1). Es folgt dann eine Lücke sowie weiter in Richtung der Vorformlingsbewegung zwei für das Preferential Heating ausgestaltete Heizkästen (30'), die sich in ihrem Aufbau von den vorab geschilderten Heizkästen (30) unterscheiden. Auch hier sind typischerweise auf einer ersten Seite des Heizkastens (30') mehrere Heizstrahler angeordnet. Auf der gegenüberliegenden Seite des Heizkastens (30') ist allerdings kein Reflektor angeordnet, sondern weitere Heizstrahler, insbesondere in der gleichen Weise wie auf der ersten Seite. Eine Drehung des Vorformlings erfolgt beim Durchlaufen dieser Heizkästen (30') nicht. Dadurch ist gewährleistet, dass die durch diese Preferential-Heating-Heizkästen (30') geführten Vorformlinge (1) auf beiden Seiten gleich temperiert werden, wohingegen die in Bewegungsrichtung vorne und hinten liegenden Umfangsbereiche weniger Temperaturstrahlung erfahren. Auf diese Weise kann ein in Umfangsrichtung gewünschtes Temperaturprofil erzeugt werden, nämlich Umfangsbereiche mit höherer Temperatur, nämlich die den Heizstrahlern zugewandten Umfangsbereiche, und Umfangsbereiche auf geringerer Temperatur, nämlich die in Bewegungsrichtung und entgegen der Bewegungsrichtung weisenden Umfangsbereiche des Vorformlings (1).

Fig. 4 zeigt weiterhin die Anordnung einer Halteeinrichtung (45), die im dargestellten Ausführungsbeispiel als umlaufend geführte Haltekette (46) oder auch als Halteriemen 46' ausgeführt ist, deren Aufgabe es ist, das Transportmittel bzw. den Vorformling drehfest zu halten, denn der Vorformling soll sich in diesem Bereich der Heizstrecke nicht drehen. Der obere Umlenkbereich (49) der Haltekette (46) befindet sich zwischen den Heizkästen (30) für die gleichmäßige Temperierung der Vorformlinge (1) und denjenigen Heizkästen (30') für das Preferential Heating. Dazu ist zum Beispiel eine Einschubposition für einen Heizkasten unbesetzt. Eine untere Umlenkrolle (48) für die Haltekette (46) ist im Bereich des Kopfrades (34) angeordnet. Insbesondere ist diese Umlenkrolle (48) so ausgebildet, das die Haltekette (46) teilweise noch dem gekrümmten Umlaufabschnitt (41) um das Kopfrad (34) herum folgt. Weiterhin ist diese Umlenkrolle (48) insbesondere verschieblich ausgebildet in der Weise, dass die Haltekette (46) über eine veränderliche Wegstrecke dem gekrümmten Bereich (41) des Kopfrades folgt, bevor die Kette (46) außer Eingriff genommen wird und seinen Rücklauf beginnt. Im linearen Umlaufabschnitt (42) befinden sich die Haltekette (46) und die Transportkette (50) auf gleicher Geschwindigkeit, und aufgrund der Parallelanordnung der beiden Kettenverläufe kann auf diese Weise der Vorformling (1) in einer festen Umfangswinkelstellung gehalten werden. Sobald allerdings der gekrümmte Umlaufabschnitt (41) beginnt, spreizt sich die Transportkette (50) auf und die Haltekette (46) und die Transportkette (50) laufen auf unterschiedlichen Radien r₁, r2 mit unterschiedlicher Winkelgeschwindigkeit. Aus diesem Grund erfolgt in diesem gekrümmten Umlaufabschnitt (41) des Kopfrades (34) eine Drehung des Transportmittels (33) und des davon gehaltenen Vorformlings (1). Der Drehwinkel ist einerseits abhängig vom Verhältnis der Umlaufradien der Transportkette (50) und der Haltekette (46) und andererseits von der Position, an der die Haltekette (46) außer Eingriff mit dem Transportmittel (33) genommen wird. Durch Verschieben dieser Position in dem gekrümmten Umlaufabschnitt (41) kann die Drehung des Vorformlings (1) bzw. des Transportdornes (33) gezielt eingestellt werden. Die gezielte Drehung des Vorformlings (1) bzw. des Transportdornes (33) ist insbesondere dann von Vorteil, wenn der Vorformling (1) in einer bestimmten Ausrichtung in die Blasstation (3) eingesetzt werden soll, wenn also die auf höherer Temperatur gehaltenen Umfangsbereiche des Vorformlings (1) zum Beispiel in einer bestimmten Relativposition zu den Blasformhälften (5, 6) stehen sollen, um eine unrunde Behälterform zu erreichen. Das Einstellen einer solchen gewünschten Ausrichtung des Vorformlings (1) wird durch das gezielte Einstellen des Umlaufwinkels durch Verschieben einer Umlenkrolle (48) der Haltekette (46) unterstützt. Wie eingangs bereits erläutert kann es sich auch um einen Halteriemen handeln, was sogar als vorteilhafte Alternative angesehen wird und der zeichnerischen Darstellung der Figur 4 eher entspricht. Haltekette und Halteriemen sind zwei Möglichkeiten für die Ausgestaltung einer Halteeinrichtung.

Die Haltekette (46) weist im dargestellten Ausführungsbeispiel einen Kettenantrieb (47) auf, ein Halteriemen würde einen Riemenantrieb aufweisen. Die aus mehreren Kettengliedern zusammengesetzte Haltekette (46) ist dabei so ausgeführt, dass ein Eingriff in die Transportmittel (33) derart erfolgt, dass beim Durchlaufen der für das Preferential Heating ausgebildeten Heizkästen (30') keine Rotation um die Längsachse der Vorformlinge (1) erfolgt. Dazu ist zum Beispiel vorgesehen, dass die Haltekette (46) mit der gleichen Geschwindigkeit läuft wie die Transportkette (50). Es ist dazu zum Beispiel möglich, dass eine Synchronisierung zwischen der Transportkette (50) und der Haltekette (46) erfolgt. Es wäre aber auch denkbar, dass zum Beispiel die Haltekette (46) über keinen eigenen Antrieb verfügt, sondern zum Beispiel Mitnehmer aufweist, die in die Transportkette (50) eingreifen und dann von der Transportkette (50) mitgeschleppt werden. Auf diese Weise kann die Geschwindigkeit der Transportkette (50) und der Haltekette (46) konstruktiv einfach gleich gehalten werden.

Fig. 4 zeigt weiterhin einen sogenannten Dorndrehriemen (51), der für die gleichmäßige Rotation der Vorformlinge (1) um ihre Längsachse in den Umlaufabschnitten sorgt, in denen noch kein Preferential Heating erfolgen soll. Dieser Dorndrehriemen (51) ist außenseitig von der Transportkette (50) geführt, in alternativen Ausführungsvarianten könnte er auch innenseitig geführt werden, und verläuft in einem geringen Abstand in den linearen Umlaufabschnitten (42) der Heizvorrichtung (H) parallel zur Transportkette (50). Dieser Dorndrehriemen (51) läuft vollständig um die Heizstrecke (24) herum und ist ein Beispiel für ein anspruchsgemäßes Antriebselement. Ein solcher Dorndrehriemen (51) ist bereits im Stand der Technik bekannt und wirkt zum Beispiel mit einem Zahnrad (52) zusammen, das an den jeweiligen Transportmitteln (33) angeordnet ist und das auf dem Dorndrehriemen (51) abrollt. Die Umlaufgeschwindigkeit des Dorndrehriemens (51) ist im Verhältnis zur Umlaufgeschwindigkeit der Transportkette (50) so gewählt, dass eine Relativgeschwindigkeit besteht, sodass das den Vorformling (1) tragende Transportmittel (33) in eine Eigenrotation aufgrund des Abrollens des Zahnrades (52) auf dem Dorndrehriemen (51) versetzt wird. Auch bezüglich des Dorndrehriemens ist anzumerken, dass in gleicher Weise stattdessen eine Dorndrehkette vorgesehen sein kann.

Im Bereich zwischen den Heizkästen (30) für die gleichmäßige Temperierung und den Heizkästen (30') für das Preferential Heating wird dieser Dorndrehriemen (51) weg von der Transportkette (50) geführt und der Dorndrehriemen (51) ist dadurch außer Eingriff mit den Zahnrädern (52) der Transportmittel (33). Dieses Wegführen ist vorgesehen, damit die Halteeinrichtung (45) Platz erhält und auf das Zahnrad (52) zugreifen kann, ohne dass der Dorndrehriemen (51) eine Störung darstellt. Dazu ist der Dorndrehriemen (51) außenseitig an der Halteeinrichtung (45) und an deren Umlenk- und Führungsrollen (48, 49) herumgeführt. Außerhalb des Bereiches der Heizkästen (30') für das Preferential Heating und nachdem die Haltekette (46) für einen geschlossenen Umlauf zurückgeführt wird, verläuft der Dorndrehriemen (51) wieder näher an der Transportkette (50) und gelangt im linken linearen Umlaufabschnitt (42) der Heizvorrichtung (H) erneut in Eingriff mit den Zahnrädern (52) der z.B. als Transportdorne ausgebildeten Transportmittel (33).

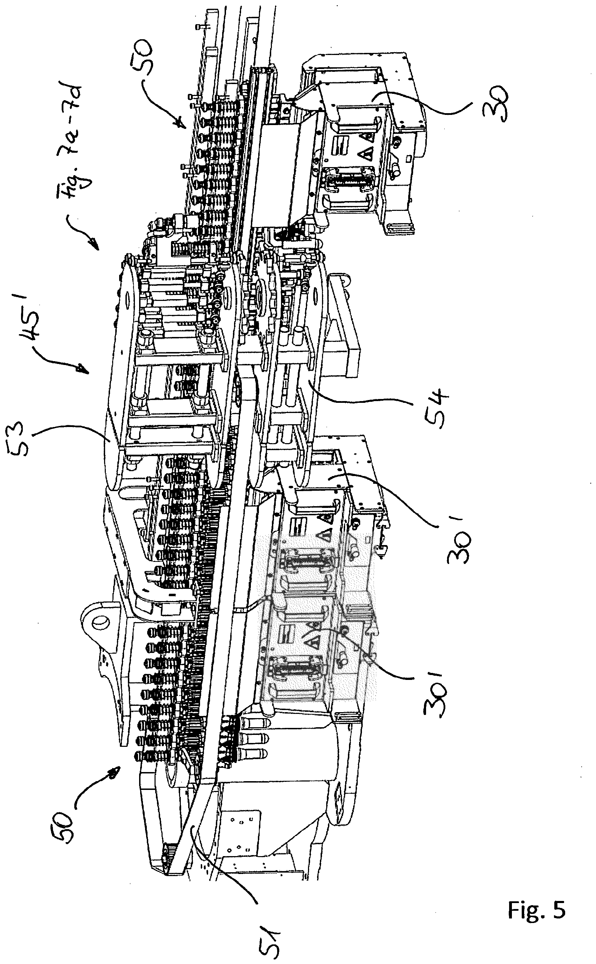

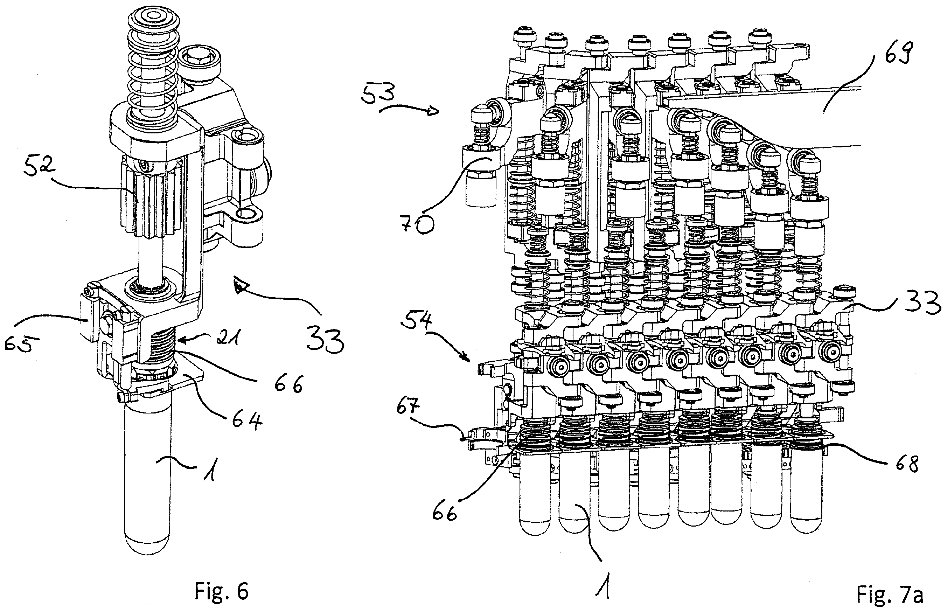

Fig. 5 zeigt in einem Teilausschnitt und in einer perspektivischen Seitendarstellung ein zweites Beispiel für eine Halteeinrichtung (45'). Weiterhin wird anhand der Detailansichten in den Figuren 7a bis 7d erläutert werden, wie in diesem Ausführungsbeispiel die Umfangspositionierung der Vorformlinge (1) erfolgt. Das Antriebselement (51) ist auch hier in Form eines umlaufenden Zahnriemens dargestellt, nämlich als Dorndrehriemen. Im vorderen rechten Bereich der Fig. 5 ist ein Heizkasten (30) dargestellt, der für die gleichmäßige Temperierung eines Vorformlings (1) in Umfangsrichtung vorgesehen ist. Im linken Bereich der Fig. 5 sind zwei Heizkästen (30') dargestellt, die für das Preferential Heating ausgebildet sind. Im dazwischenliegenden Bereich, der durch Weglassen zum Beispiel eines Heizkastens freigeblieben ist, ist die Halteeinrichtung (45') angeordnet, die auch anspruchsgemäße Sperrelemente (67) bzw. eine Sperreinrichtung aufweist. Diese Halteeinrichtung (45') besteht aus einem oberen Bauteil (53) und einem unteren Bauteil (54). Zwischen diesen Bauteilen (53, 54) ist der Dorndrehriemen (51) weg von der Transportkette (50) geführt und verläuft außenseitig an den Heizkästen (30') entlang.

In nicht dargestellter Weise sind das obere Bauteil (53) und das untere Bauteil (54) der Halteeinrichtung (45') zu einer koordinierten Umlaufbewegung gekoppelt. Auch hier ist denkbar, beide Bauteile (53, 54) mit eigenen Antrieben zu versehen, die zueinander koordiniert arbeiten, um eine gleichförmige und synchronisiert zu der Transportkette ausgeführte Bewegung zu erreichen. Die Halteeinrichtung kann aber auch von der Transportkette (50) mitgenommen werden. Letzteres hätte den Vorteil, dass automatisch die Halteeinrichtung (45') mit gleicher Geschwindigkeit umläuft wie die Transportkettenglieder. Bei Eingriff der Halteeinrichtung (45') in das Zahnrad (52) des Transportdornes (33) und bei der gegebenen gleichen Umlaufgeschwindigkeit der Halteeinrichtung (45') und des Transportdornes (33) führt dies dazu, dass eine Eigenrotation des Vorformlings (1) um seine Längsachse unterbunden ist. Entsprechend kann der Vorformling (1) mit einer festen Orientierung in Umfangsrichtung durch die für das Preferential Heating ausgebildeten Heizkästen (30') geführt werden. Da der Dorndrehriemen (51) im Bereich der Halteeinrichtung (45') außer Eingriff mit den Transportdornen (33) geführt wird, wäre es auch ausreichend, in diesem Bereich die Dorndrehung zu beenden und nur dort anzuhalten.

Figur 6 zeigt in einer perspektivischen Ansicht ein einzelnes Transportelement (33) mit einem davon klemmend gehalterten Vorformling (1). Dabei ist das Transportelement (33) als Klemmdorn ausgebildet, der klemmend in den Mündungsabschnitt (21) des Vorformlings (1) eingreift. Das Transportelement (33) weist weiterhin ein Zahnrad (52) auf, das im Zusammenspiel mit dem in Fig. 5 gezeigten Dorndrehriemen (51) für die Rotation des Vorformlings (1) um seine Längsachse sorgt. Der Transportdorn (33) trägt weiterhin einen Mündungsschirm (64). Dieser Mündungsschirm (64) ist mit Befestigungsmitteln (65) am Transportdorn (33) befestigt und schirmt den Mündungsabschnitt (21) des Vorformlings (1) gegen eine unerwünschte Erwärmung ab, denn der Mündungsabschnitt (21) weist bereits ein fertig ausgeprägtes Gewinde (66) auf.

Figur 7a zeigt in einer vergrößerten Ansicht den Bereich in Figur 5, in dem die Vorformlinge (1) in den Bereich der Halteeinrichtung (45') einlaufen, die in diesem Beispiel aus zwei übereinander angeordneten Baueinheiten (53) und (54) bestehen. Die Transportelemente (33) sind dabei im wesentlichen so aufgebaut, wie sich dies aus Figur 6 ergibt.

Da in dem gezeigten Ausführungsbeispiel der Figuren 7a bis 7d die Sperrelemente (67) in eine Vertiefung zwischen dem Vorformlingsgewinde (66) und dem Stützring (68) eingreifen sollen erfolgt wie aus der Figur 7a von links nach rechts anhand der Vorformlinge (1) erkennbar zunächst ein Absenken der Vorformlinge (1), indem durch Abgriff an einem Kurvensegment (69) eine Absenkeinheit (70) auf den Transportdorn (33) abgesenkt wird, wodurch die Vorformlinge (1) nach unten durch die Mündungsschirme (64) verschoben werden, sodass die Ausrichtstruktur (75) unterhalb des Mündungsschirmes (64) frei zugänglich wird und ein Sperrelement (67) Zugriff erhält. Nach dieser Absenkung des Vorformlings (1) kann zum Beispiel das Sperrelement (67) in eine Sperrposition verschwenkt werden, während gleichzeitig der Dorndrehriemen (51) weiterhin für eine Rotationsbewegung des Transportdornes (33) sorgt. Der Vorformling (1) vollzieht diese Drehung mit und sobald das Sperrelement (67) in Eingriff mit der Ausrichtstruktur (75) gelangt wird der Vorformling (1) drehfest gehalten und der Transportdorn (33) dreht ohne den Vorformling (1) weiter. Sowohl das Absenken als auch das Umfangspositionieren erfolgt bevorzugt hinter dem letzten für die gleichmäßige Temperierung vorgesehenen Heizkasten (30) und vor dem ersten für das Preferential Heating vorgesehenen Heizkasten (30').

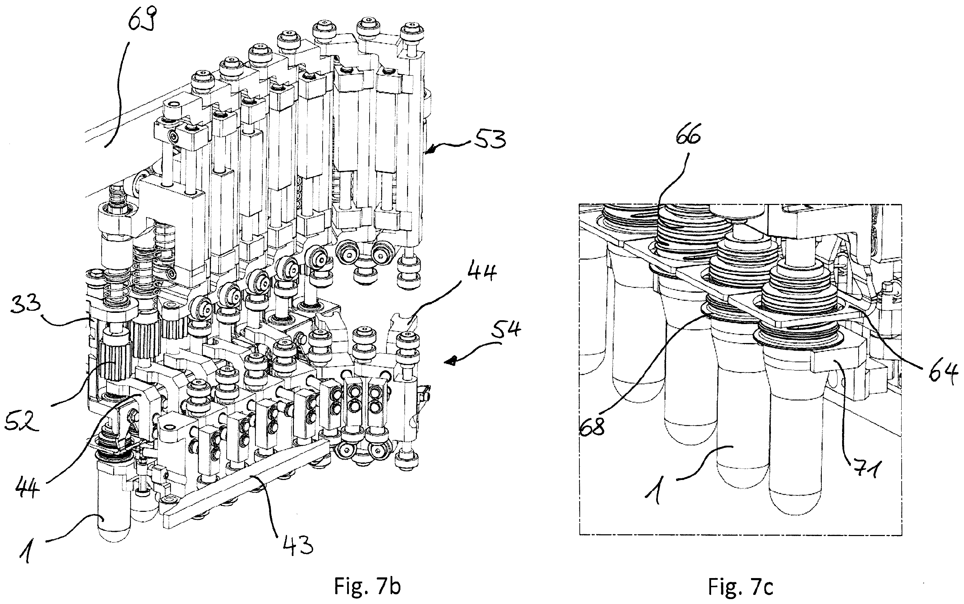

Die Sperrelemente (67) bewegen sich mit den Transportdornen (33). Figur 7b zeigt wie die weiter oben angesprochenen Mitnehmer (44) ausgeführt sein könnten.

Sobald sich die Halteeinrichtung (45') mit dem Sperrelement (67) in die Bewegungsbahn der Transportkette (50) eingeschwenkt hat und synchron zum zugeordneten Transportkettenglied bewegt ist wird über eine Absenkkurve (69) eine drehbar gelagerte Hülse von oben auf die absenkbaren Elemente des Transportdornes (33) gedrückt, um den Vorformling (1) mit dessen Mündungsabschnitt (21) nach unten aus dem Mündungsschirm (64) zu schieben. Sobald der Mündungsabschnitt (21) seine vorgesehene Höhe erreicht hat, wird über eine Rastkurve eine federbelastete Halteklinke eingeschwenkt. In der im Stand der Technik bekannten Weise wälzt das Zahnrad (52) des Transportdornes (33) am Dorndrehriemen (51) ab und der Transportdorn (33) dreht sich zusammen mit dem Vorformling (1). Die Wegstrecke entlang des Dorndrehriemens (51) ist dabei bevorzugt so lang gewählt, dass das Zahnrad (52) mit dem Transportdorn (33) mindestens 2 Umdrehungen durchführt. Es ist dadurch sichergestellt, dass die Rastklinke auf jeden Fall einrasten kann, selbst wenn zufällig beim Einschwenken die Ausrichtkontur gerade erst die Einschwenkposition überstrichen hat.

Nach Beendigung der Sollausrichtung der Vorformlinge (1) in deren Umfangsrichtung schwenkt die Rastklinke zurück in ihre Ruheposition und der Transportdorn (33) wird wieder angehoben, zum Beispiel weil die Absenkkurve (69) endet.

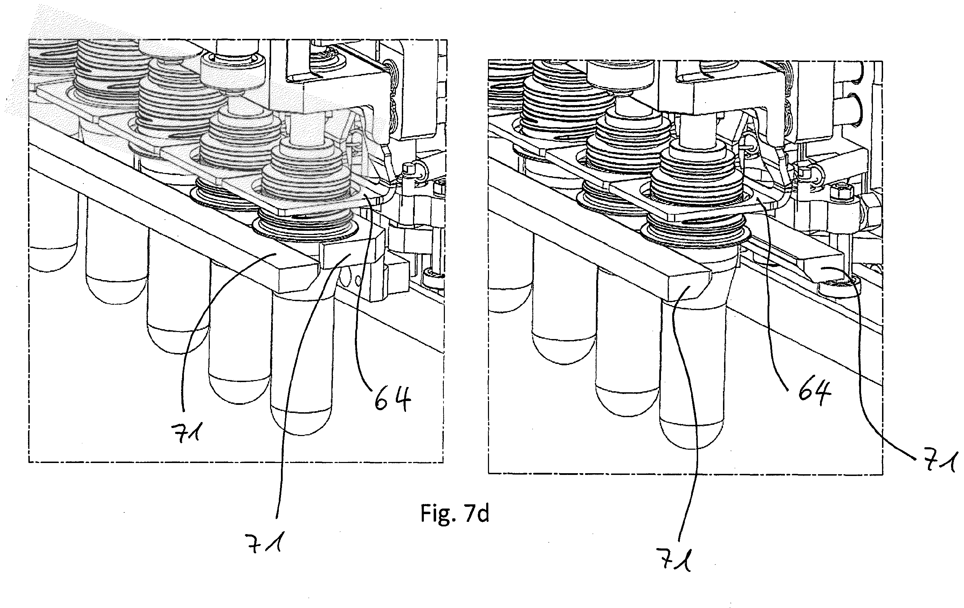

Zusätzlich kann in der Absenkeinheit (70) ein weiterer, kurvengesteuerter Stempel integriert werden, um die Klemmkraft des Transportdornes (33) wenigstens teilweise zu lösen und so die Dreheigenschaften des Vorformlings (1) auf dem Transportdorn (1) zu verbessern. Generell und speziell in einem solchen Fall ist es bevorzugt, dass in diesem Bereich Führungen (71) vorgesehen sind, die den Vorformling (1) gegen ein Herabfallen nach unten sichern. Diese Führungen (71) werden bevorzugt so angeordnet, dass der Stützring (68) des Vorformlings (1) darauf zur Auflage kommt. Es ist zum Beispiel denkbar, diese Führungen (71) als mitlaufende Stütztaschen auszuführen, siehe Figur 7c. Es ist auch denkbar, diese Führungen feststehend anzuordnen, siehe Figur 7d, rechtes Bild. Es sind auch Kombinationen denkbar, zum Beispiel mitlaufende Stütztaschen (71), die einen Vorformling (1) auf einer Seite abstützen, sowie eine feststehende Führung (71), die den Vorformling (1) auf einer gegenüberliegenden Seite gegen Herabfallen stützen, siehe Figur 7d, linkes Bild.

Die Absenkeinheit (70), die für das Absenken des Vorformlings (1) sorgt, ist bevorzugt auf der oberen Ketteneinheit (53) vorgesehen. Auch die optional vorgesehene klemmkraftreduzierende Einheit ist bevorzugt auf der oberen Ketteneinheit (53) vorgesehen. Weiterhin ist mit Vorteil die Absenkeinheit (70) mit Federkraft in einer oberen Endlage gehalten und über eine Absenkkurve (69) und eine zugeordnete Kurvenrolle (72) verfahrbar.

Die untere Ketteneinheit (54) weist bevorzugt für jedes Glied der Ketteneinheit einen Mitnehmer (44) auf, siehe Figur 7b, der in die Transportkette (50) eingreift, um eine synchronisierte und zueinander ausgerichtete Bewegung zu erreichen. Es wird dadurch ein separater Antrieb und Synchronisierungsaufwand eingespart.

Die vorstehend beschriebene Rastklinke als Sperrelement (67) ist bevorzugt federbelastet in einer Ruhestellung gehalten. Nach Absenkung des Vorformlings (1) wird die Rastklinke zum Beispiel kurvengesteuert in eine Eingriffsposition verfahren. Nach erfolgter Ausrichtung des Vorformlings (1) kann die Rastklinke dann wieder in ihre Ruhestellung verschoben werden.

Mitfahrende Stütztaschen (71) werden bevorzugt an der unteren Ketteneinheit (53) angeordnet.

Fig. 7b zeigt, wie solche wie im vorstehenden Absatz angesprochene Mitnehmer (44) ausgeführt sein könnten. Die untere Ketteneinheit (54) weist in radialer Richtung verschiebliche Mitnehmer (44) auf, die z.B. federgespannt in einer radial nach innen gezogenen Positionierung gehalten sind. Bei Erreichen einer externen Steuerkurve (43) werden die Mitnehmer (44) radial nach außen gedrückt und gelangen in Schleppeingriff mit den Transportmitteln (33) der Transportkette (50). Eine solche Lösung wird als vorteilhaft betrachtet, da die Mitnehmer (44) nicht einfach in die linearbewegte Transportkette (50) einschwenken können. Der Eingriff der Mitnehmer (44) kann z.B. nur im linearen Umlaufbereich (42) erfolgen.

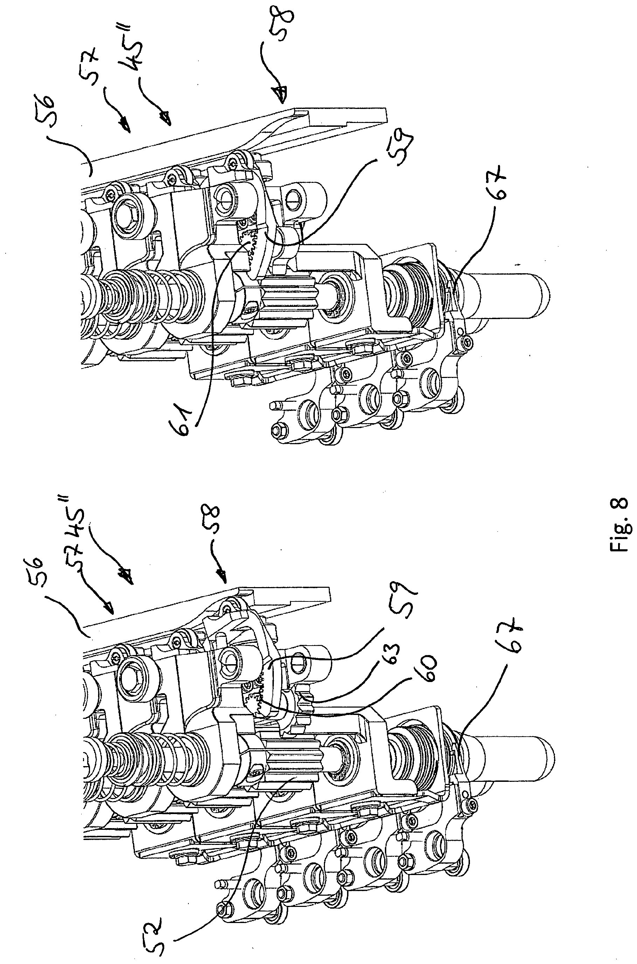

Fig. 8 zeigt eine weitere Konkretisierung einer Halteeinrichtung (45"). Die Halteeinrichtung (45") ist durch eine externe Steuerkurve (56) kurvengesteuert ausgebildet. In einem ersten Bereich (57) dieser Steuerkurve (56) befindet sich die Halteeinrichtung (45") außer Eingriff mit dem Zahnrad (52) des Transportdornes (33). In einem zweiten Bereich (58) der Steuerkurve (56) wird ein Schwenkhebel (59) betätigt, der über eine Innenverzahnung (60) verfügt und der ein Zahnritzel (61) antreibt. Dieses Ritzel (61) ist auf einer gemeinsamen Welle (62) mit einen Riemenscheibensegment (63) angeordnet. Die Schwenkbewegung des Schwenkhebels (59) führt zu einer Drehung des Ritzels (61). Die Drehung des Ritzels (61) wird von dem Riemenscheibensegment (63) mitvollzogen. Im ersten Bereich (57) der Steuerkurve (56) befindet sich dieses Riemenscheibensegment (63) außer Eingriff mit dem Zahnrad (52) des Transportdornes (33). Im zweiten Bereich (58) der Steuerkurve (56) schwenkt der Schwenkhebel (59), dreht dadurch das Ritzel (61) und dadurch gelangt das Riemenscheibensegment (63) in Eingriff mit dem Zahnrad (52) des Transportdornes (33). Beibehaltung dieser Position führt dazu, dass das Zahnrad (52) festgehalten ist und der Transportdorn (33) und der davon gehaltene Vorformling (1) drehfest gehalten sind.

Diese Konstruktion erlaubt es weiterhin, den Transportdorn (33) und den davon gehaltenen Vorformling (1) nicht nur drehfest zu halten, sondern gezielt um einen bestimmten Drehwinkel zu verdrehen, nämlich dann, wenn die Schwenkbewegung des Schwenkhebels (59) so ausgeführt wird, dass das Riemenscheibensegment (63) nicht nur das Zahnrad (52) in einer bestimmten Position festhält, sondern der Schwenkhebel (59) könnte zum Beispiel in einem dritten Bereich der Steuerkurve (56) stärker verschwenkt werden, dadurch das Ritzel (61) noch weiter drehen und dadurch das Riemenscheibensegment (63) noch weiter drehen, sodass in Folge des kämmenden Eingriffs mit dem Zahnrad (52) des Transportdornes (33) dieses Zahnrad (52) und somit auch der Transportdorn (33) um einen bestimmten Winkel verdreht wird.

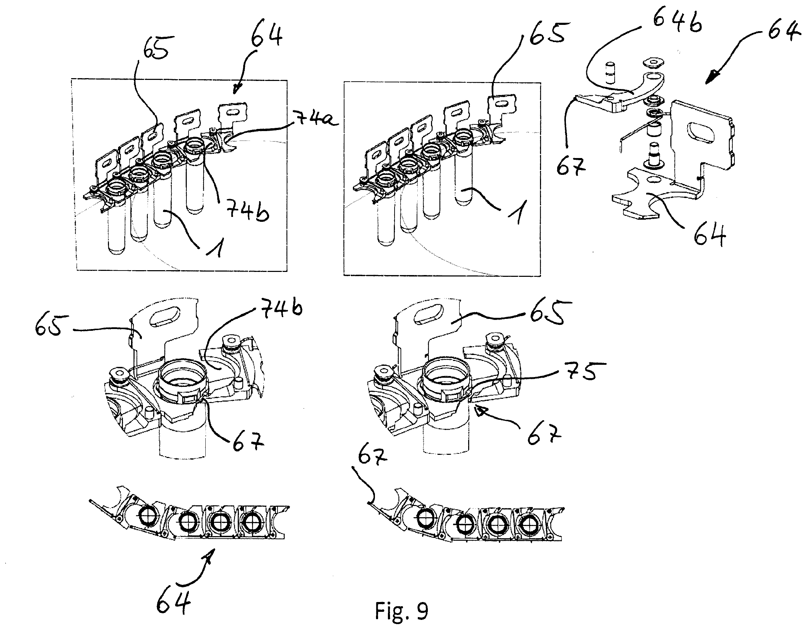

Die Figur 9 zeigt in mehreren Abbildungen Sperrelemente (67), die an Mündungsschirmen (64) ausgebildet sind, welche mittels Befestigungselementen (65) an Transportdornen befestigt sind und mit diesen umlaufen. Die Mündungsschirme (64) sind hierzu so ausgebildet, dass sie in Bewegungsrichtung vorne und in Bewegungsrichtung hinten jeweils Ausnehmungen (74a, 74b) aufweisen, um Vorformlinge (1) teilumschließen zu können. Zusammen mit vorauslaufenden Mündungsschirmen (64) und nachlaufenden Mündungsschirmen (64) fügen sich benachbarte Mündungsschirme zu einer Abschirmung gegen unerwünschte Erwärmung zusammen, da ein dazwischen gehaltener Vorformling (1) nahezu vollständig umschlossen wird. Aufgrund dieser gewählten Aufteilung der Mündungsschirme (64) ist es möglich, radial innen an den in Bewegungsrichtung hinteren Ausnehmungen (74b) oder radial außen an den in Bewegungsrichtung vorne liegenden Ausnehmungen (74a) Sperrelemente (67) anzuordnen. Diese Sperrelemente (67) werden so dimensioniert und so angeordnet, dass beim Aufspreizen der Transportkette (50) in den gekrümmten Umlaufabschnitten (41) diese Sperrelemente (67) in Richtung auf einen Vorformling (1) verschwenkt werden und dabei am Vorformling (1) zur Anlage kommen. Der Vorformling wird in der beschriebenen Weise weiterhin von einem Dorndrehriemen (51) in Eigenrotation versetzt und das Sperrelement (67) ist so angeordnet und ausgebildet, mit einer Ausrichtkontur (75) am Vorformling (1) zusammen zu arbeiten. Sobald das Sperrelement (67) in Eingriff mit dieser Ausrichtkontur (75) gelangt stoppt die Rotationsbewegung des Vorformlings (1) und der Transportdorn (33) dreht weiter bei festgehaltenem Vorformling (1).

Bevorzugt ist das Sperrelement (67) dabei federnd ausgebildet. Dies kann zum Beispiel dadurch erfolgen, dass das Sperrelement (67) selber federnde Eigenschaften hat, also zum Beispiel aus einem dünnen Federmaterial hergestellt ist. Es ist aber auch möglich, den Mündungsschirm (64) zweigeteilt auszubilden mit einem ersten, in Bewegungsrichtung vorderen Schirmabschnitt (64a) und einem zweiten, in Bewegungsrichtung hinten liegenden Schirmabschnitt (64b). Beide Abschnitte können zum Beispiel federnd aneinander gelagert sein, wobei bevorzugt ein Schirmabschnitt (64a) fest mit den Befestigungsmitteln (65) verbunden ist, während der andere an diesem festen Mündungsabschnitt (64a) federnd angelenkt ist. An diesem federnd angelenkten Schirmabschnitt (64b) sollte dann auch bevorzugt das Sperrelement (67) angeordnet sein.

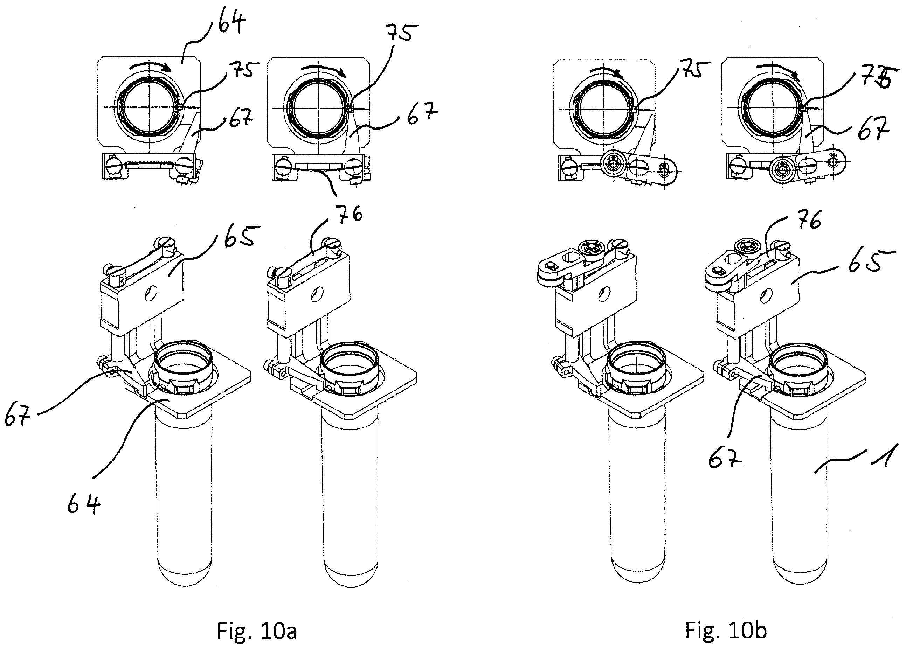

Die Figuren 10a und 10b zeigen weitere alternative Ausführungsbeispiele für an den Mündungsschirmen (64) bzw. an dessen Befestigungsmitteln (65) angeordnete Sperrelemente (67). Sowohl das Ausführungsbeispiel der Figur 10a als auch das Ausführungsbeispiel der Figur 10b sind als mechanischer Flip-Flops ausgebildet, indem der jeweils gezeigte Sperrhebel (67) sowohl in seiner Eingriffspositionierung federbelastet gehalten ist als auch in seiner Ruhepositionierung, und beide Positionierung sind Endlagen. Das Verschwenken aus der einen in die andere Positionierung erfolgt zum Beispiel kurvengesteuert. Wie in den Figuren 10a und 10b erkennbar wird zur Erzeugung der Federkraft, die den Sperrhebel in seinen Endlagen festhält, eine Blattfeder (76) verwendet.

## Patentansprüche

1. Heizvorrichtung (H) zur thermischen Konditionierung von aus einem thermoplastischen Material bestehenden Vorformlingen (1) auf ein für eine Blasformung geeignetes Temperaturprofil, wobei die Heizvorrichtung (H) mehrere entlang einer Heizstrecke (24) hintereinander angeordnete Heizeinrichtungen (30, 30') aufweist, mit Transportmitteln (33) zum Transport der Vorformlinge (1) auf einem Transportweg (55) entlang der Heizstrecke (24) und entlang der Heizeinrichtungen (30, 30'), wobei die Transportmittel (33) kettenartig zu einer geschlossen entlang der Heizstrecke (24) umlaufenden Transportkette (50) verbunden sind, wobei die Transportmittel (33) einen Drehantriebskörper (52) aufweisen, der mit einem beabstandet zur Transportkette (50) umlaufend angeordneten und angetriebenen Antriebselement (51) zusammenwirkt zur Einbringung einer Eigenrotation um eine Längsachse des Transportmittels (33) durch Eingriff in den Drehantriebskörper (52), wobei die Heizvorrichtung (H) einen ersten Heizabschnitt mit ersten Heizeinrichtungen (30) aufweist zur gleichmäßigen Temperierung der Vorformlinge (1) in deren Umfangsrichtung und einen zweiten Heizabschnitt mit zweiten Heizeinrichtungen (30') zur ungleichmäßigen Temperierung der Vorformlinge (1) in deren Umfangsrichtung, wobei das Antriebselement (51) so angeordnet ist, dass es im Bereich des ersten Heizabschnittes in Eingriff mit dem Drehantriebskörper (52) ist und im Bereich des zweiten Abschnittes außer Eingriff mit dem Drehantriebskörper (52) ist, wobei die Heizvorrichtung (H) weiterhin Ausrichtmittel für die Sollausrichtung der Vorformlinge (1) in deren Umfangsrichtung aufweist, **dadurch gekennzeichnet, dass** die Transportmittel (33) ausgeführt sind, die Vorformlinge mit nach oben weisendem Mündungsabschnitt (21) zu transportieren, und dass die Ausrichtmittel ausgeführt sind, mit einer Ausrichtkontur (75) am Vorformling (1) zusammenzuwirken, wobei die Ausrichtmittel als die Drehung der Vorformlinge (1) verhindernde Sperrelemente (67) ausgeführt sind, wobei die Sperrelemente (67) entweder an den kettenartig verbundenen Transportmitteln (33) angeordnet sind oder an einer zwischen dem ersten und dem zweiten Heizabschnitt angeordneten Sperreinrichtung (45, 45', 45"), die aus mehreren insbesondere kettenartig verbundenen Sperrelementen (67) zusammengesetzt ist, die in einem Ausrichtabschnitt des Transportweges (55) parallel zur Transportkette (50) geführt sind und die in diesem Abschnitt in die Ausrichtkontur (75) eingreifend ausgebildet und angeordnet sind.

2. Heizvorrichtung (H) nach Anspruch 1, **dadurch gekennzeichnet, dass** die Transportkette (50) über voneinander beabstandet angeordnete Umlenkräder (36,34) geführt ist zur Bildung gekrümmter Umlaufabschnitte (41) im Bereich der Umlenkräder (34) und linearer Umlaufabschnitte (42) in den dazwischenliegenden Bereichen, wobei die Heizeinrichtungen (30, 30') in den linearen Umlaufabschnitten (42) angeordnet sind.

3. Heizvorrichtung (H) nach der ersten Alternative des Kennzeichens von Anspruch 1, wobei der Mündungsbereich (21) der Vorformlinge (1) durch Mündungsschirme (64) gegen Überhitzung geschützt ist, die mit Befestigungsmitteln (65) an den Transportmitteln (33) befestigt sind und mit diesen umlaufen, **dadurch gekennzeichnet, dass** die Sperrelemente (67) an den Mündungsschirmen (64) oder an den Befestigungsmitteln (65) angeordnet sind.

4. Heizvorrichtung (H) nach Anspruch 3, **dadurch gekennzeichnet, dass** jedes Transportmittel (33) einen Mündungsschirm (64) trägt, der in Bewegungsrichtung und entgegen seiner Bewegungsrichtung jeweils eine halbkreisförmige Ausnehmung (74a, 74b) aufweist, wobei jeder Mündungsschirm (64) zusammen mit seinem vorauslaufenden Mündungsschirm (64) und zusammen mit seinem nachlaufenden Mündungsschirm (64) jeweils einen dazwischen angeordneten Vorformling (1) umgreift, wobei die Sperrelemente (67) randseitig, bevorzugt endständig, an einer Ausnehmung (74a, 74b) angeordnet sind, wobei die Sperrelemente (67) so angeordnet und dimensioniert sind, dass sie mit der Ausrichtkontur (75) des Vorformlings (1) in Eingriff gelangt, wenn das Transportmittel (33) im Bereich der gekrümmten Umlaufabschnitte (41) umläuft, wobei der Mündungsschirm (64) insbesondere zweigeteilt ausgeführt ist, und jeder der beiden Mündungsschirmteile (64a, 64b)) eine der beiden Ausnehmungen (74a, 74b) aufweist, insbesondere wobei das das Sperrelement (67) aufweisende Teil federnd verschwenkbar an dem anderen Teil gelagert ist.

5. Heizvorrichtung (H) nach Anspruch 3, **dadurch gekennzeichnet, dass** die Sperrelemente (67) schwenkbar an den Befestigungsmitteln (65) gelagert sind.

6. Heizvorrichtung (H) nach der zweiten Alternative des Kennzeichens von Anspruch 1, **dadurch gekennzeichnet, dass** das die Sperreinrichtung (45") wenigstens ein Koppelelement (44) aufweist, das zur Bewegungskopplung in koppelnden Eingriff mit den Transportmitteln (33) verfahrbar ist, insbesondere kurvengesteuert verfahrbar ist, insbesondere wobei die Sperreinrichtung (45") aus zwei in vertikaler Richtung zueinander beabstandet angeordneten Ketteneinheiten (53, 54) besteht, die bewegungsgekoppelt ausgeführt sind und zwischen denen das Antriebselement (51) weg von der Transportkette (50) hindurchgeführt ist.

7. Heizvorrichtung (H) nach einem der vorhergehenden Ansprüche, **dadurch gekennzeichnet, dass** die Transportmittel (33) als Klemmdorne ausgeführt sind und im Ausrichtbereich des Transportweges (55) die Klemmkraft des Klemmdornes zumindest teilweise lösende Mittel vorgesehen sind, wobei in diesem Bereich insbesondere mitlaufende und/oder stationäre Führungen (71) als Auflageflächen für die Vorformlinge (1) angeordnet sind, insbesondere für den Stützring (68) der Vorformlinge (1).

8. Heizvorrichtung (H) nach einem der vorhergehenden Ansprüche, **dadurch gekennzeichnet, dass** die Transportmittel (33) als Transportdorne ausgebildet sind, insbesondere als in den Mündungsabschnitt der Vorformlinge (1) einführbare Klemmdorne.

9. Heizvorrichtung (H) nach einem der vorhergehenden Ansprüche, **dadurch gekennzeichnet, dass** der Drehantriebskörper (52) als Zahnrad ausgebildet ist und das Antriebselement (51) als Zahnriemen.

10. Heizvorrichtung (H) nach einem der vorhergehenden Ansprüche, **dadurch gekennzeichnet, dass** die Sperrelemente (67) federnd ausgebildet sind.

11. Heizvorrichtung (H) nach einem der vorhergehenden Ansprüche, **dadurch gekennzeichnet, dass** die Sperrelemente (67) aus einer Eingriffsstellung, in der die Sperrelemente (67) mit der Ausrichtkontur (75) in Eingriff gelangen können, in eine Ruhestellung verfahrbar sind, in der die Sperrelemente (67) nicht mit der Ausrichtkontur (75) in Eingriff gelangen können, wobei die Sperrelemente (67) insbesondere kurvengesteuert verfahrbar ausgeführt sind, wobei insbesondere beide Stellungen als federbelastete Endlagen ausgebildet sind.

12. Blasmaschine, insbesondere Streck-Blasmaschine, mit einer Heizvorrichtung (H) nach einem der vorhergehenden Ansprüche.

## Claims

1. A heating device (H) for thermally conditioning preforms (1) consisting of a thermoplastic material to a temperature profile suitable for a blow moulding, wherein the heating device (H) has several heating means (30, 30'), which are arranged one behind the other along a heating section (24), comprising transport means (33) for transporting the preforms (1) on a transport path (55) along the heating section (24) and along the heating means (30, 30'), wherein the transport means (33) are connected in a chain-like manner to form a transport chain (50), which revolves in a closed manner along the heating section (24), wherein the transport means (33) have a rotary drive body (52), which cooperates with a drive element (51), which is arranged and driven in a revolving manner spaced apart from the transport chain (50) for introducing an intrinsic rotation around a longitudinal axis of the transport means (33) by engagement with the rotary drive body (52), wherein the heating device (H) has a first heating portion comprising first heating means (30) for uniformly temperature-controlling the preforms (1) in the circumferential direction thereof, and a second heating portion comprising second heating means (30') for non-uniformly temperature-controlling the preforms (1) in the circumferential direction thereof, wherein the drive element (51) is arranged such that it engages with the rotary drive body (52) in the region of the first heating portion, and is disengaged from the rotary drive body (52) in the region of the second portion, wherein the heating device (H) furthermore has alignment means for the target alignment of the preforms (1) in the circumferential direction thereof, **characterised in that** the transport means (33) are embodied to transport the preforms with mouth section (21) facing upwards, and that the alignment means are embodied to cooperate with an alignment contour (75) at the preform (1), wherein the alignment means are embodied as blocking elements (67), which prevents the rotation of the preforms (1), wherein the blocking elements (67) are either arranged at the transport means (33), which are connected in a chain-like manner, or at a blocking means (45, 45', 45"), which is arranged between the first and the second heating portion and which is comprised of several blocking elements (67), which are in particular connected in a chain-like manner and which are guided parallel to the transport chain (50) in an alignment portion of the transport path (55) and which are embodied and arranged so as to engage with the alignment contour (75) in this portion.

2. The heating device (H) according to Claim 1, **characterised in that** the transport chain (50) is guided via deflection wheels (36, 34), which are arranged spaced apart from one another, for forming curved rotary portions (41) in the region of the deflection wheels (34), and linear rotary portions (42) in the regions located therebetween, wherein the heating means (30, 30') are arranged in the linear rotary portions (42).

3. The heating device (H) according to the first alternative of the preamble of Claim 1, wherein the mouth region (21) of the preforms (1) is protected against overheating by means of mouth screens (64), which are fastened by means of fastening means (65) to the transport means (33) and revolves with the latter, **characterised in that** the blocking elements (67) are arranged at the mouth screens (64) or at the fastening means (65).

4. The heating device (H) according to Claim 3, **characterised in that** each transport means (33) supports a mouth screen (64), which in each case has a semi-circular recess (74a, 74b) in the direction of movement and opposite to the direction of movement thereof, wherein each mouth screen (64), together with its leading mouth screen (64) and together with its trailing mouth screen (64), in each case engages around a preform (1) arranged therebetween, wherein the blocking elements (67) are arranged at the edge side, preferably terminally, at a recess (74a, 74b), wherein the blocking elements (67) are arranged and dimensioned such that they come into engagement with the alignment contour (75) of the preform (1) when the transport means (33) revolves in the region of the curved rotary portions (41), wherein the mouth screen (64) is in particular embodied to be divided into two parts, and each of the two mouth screen parts (64a, 64b) has one of the two recesses (74a, 74b), in particular wherein the part having the blocking element (67) is mounted to the other part in a resiliently pivotable manner.

5. The heating device (H) according to Claim 3, **characterised in that** the blocking elements (67) are pivotably mounted to the fastening means (65).

6. The heating device (H) according to the second alternative of the preamble of Claim 1, **characterised in that** the blocking means (45") has at least one coupling element (44), which, for the motion coupling, can be displaced into coupling engagement with the transport means (33), in particular can be displaced in a cam-controlled manner, in particular wherein the blocking means (45") consists of two chain units (53, 54), which are arranged spaced apart from one another in the vertical direction and which are embodied to be motion-coupled, and between which the drive element (51) is guided through, away from the transport chain (50).

7. The heating device H) according to any one of the preceding claims, **characterised in that** the transport means (33) are embodied as clamping mandrels, and means, which at least partially release the clamping force of the clamping mandrel, are provided in the alignment region of the transport path (55), wherein in particular co-running and/or stationary guides (71) are arranged in this region as bearing surfaces for the preforms (1), in particular for the support ring (68) of the preforms (1).

8. The heating device (H) according to any one of the preceding claims, **characterised in that** the transport means (33) are formed as transport mandrels, in particular as clamping mandrels, which can be inserted into the mouth section of the preforms (1).

9. The heating device (H) according to any one of the preceding claims, **characterised in that** the rotary drive body (52) is formed as gear wheel, and the drive element (51) as gear belt.

10. The heating device (H) according to any one of the preceding claims, **characterised in that** the blocking elements (67) are formed to be resilient.

11. The heating device (H) according to any one of the preceding claims, **characterised in that** the blocking elements (67) can be displaced from an engaged position, in which the blocking elements (67) can come into engagement with the alignment contour (75), into a rest position, in which the blocking elements (67) cannot come into engagement with the alignment contour (75), wherein the blocking elements (67) are in particular embodied to be displaceable in a cam-controlled manner, wherein in particular both positions are formed as spring-loaded end positions.

12. A blow moulding machine, in particular stretch blow moulding machine, comprising a heating device (H) according to any one of the preceding claims.

## Revendications

1. Dispositif de chauffage (H) pour le conditionnement thermique de préformes (1) en un matériau thermoplastique de sorte à obtenir un profil de températures approprié au moulage par soufflage, le dispositif de chauffage (H) présentant plusieurs unités de chauffage (30, 30') agencées l'une derrière l'autre le long d'une section de chauffage (24), avec des moyens de transport (33) pour le transport des préformes (1) selon un parcours (55) le long d'une section de chauffage (24) et le long des unités de chauffage (30, 30'), les moyens de transport (33) étant reliés à l'instar des maillons d'une chaîne pour former une chaîne de transport (50) fermée en rotation le long de la section de chauffage (24), les moyens de transport (33) présentant un corps d'entraînement en rotation (52) qui agit conjointement avec un élément d'entraînement (51) agencé et entraîné de façon à circuler à une certaine distance de la chaîne de transport (50) pour réaliser, par engagement dans le corps d'entraînement en rotation (52), un mouvement de rotation propre autour d'un axe longitudinal du moyen de transport (33), le dispositif de chauffage (H) présentant une première section de chauffage avec une première série d'unités de chauffage (30) pour un équilibrage thermique périphérique uniforme des préformes (1) et une seconde section de chauffage avec une seconde série d'unités de chauffage (30') pour un équilibrage thermique périphérique préférentiel des préformes (1), l'élément d'entraînement (51) étant agencé de façon à s'engager avec le corps d'entraînement en rotation (52) dans la première section de chauffage et à s'en désengager dans la seconde section, le dispositif de chauffage (H) présentant en outre des moyens d'alignement pour assurer l'orientation périphérique nominale des préformes (1), **caractérisé en ce que** les moyens de transport (33) sont réalisés pour transporter les préformes avec leur section d'embouchure (21) tournée vers le haut et les moyens d'alignement sont réalisés pour agir conjointement avec un gabarit d'alignement (75) au niveau de la préforme (1), les moyens d'alignement étant réalisés sous forme d'éléments de blocage (67) empêchant la rotation des préformes (1), les éléments de blocage (67) étant agencés soit au niveau des moyens de transport (33) enchaînés, soit sur un dispositif de blocage (45, 45', 45") agencé entre la première et la seconde section de chauffage et constitué de plusieurs éléments de blocage (67) formant notamment un enchaînement et guidés parallèlement à la chaîne de transport (50) dans une section d'alignement du parcours (55) dans laquelle ces éléments sont formés et agencés de façon à entrer en prise avec le gabarit d'alignement (75).

2. Dispositif de chauffage (H) selon la revendication 1, **caractérisé en ce que** la chaîne de transport (50) est guidée par des roues de renvoi (36, 34) agencées à une certaine distance l'une de l'autre pour former des sections de circulation incurvées (41) au niveau des roues de renvoi (34) et des sections de circulation linéaires (42) dans les zones intermédiaires, les dispositifs de chauffage (30, 30) étant agencés dans les sections de circulation linéaires (42).

3. Dispositif de chauffage (H) selon la première alternative de la caractéristique de la revendication 1, la section d'embouchure (21) des préformes (1) étant protégée contre les surchauffes par des écrans de protection d'embouchure (64) fixés par des moyens de fixation (65) aux moyens de transport (33) et circulant avec ceux-ci, **caractérisé en ce que** les éléments de blocage (67) sont agencés aux écrans de protection d'embouchure (64) ou aux moyens de fixation (65).

4. Dispositif de chauffage (H) selon la revendication 3, **caractérisé en ce que** chaque moyen de transport (33) porte un écran de protection d'embouchure (64) qui présente respectivement dans son sens de déplacement et en sens contraire au déplacement un évidement semi-circulaire (74a, 74b), chaque écran de protection d'embouchure (64) enveloppant conjointement avec l'écran de protection d'embouchure (64) qui le précède et l'écran de protection d'embouchure (64) qui le suit respectivement une préforme (1) placée entre les deux, les éléments de blocage (67) étant agencés, côté bord, de préférence côté extrémité, au niveau d'un évidement (74a, 74b), les éléments de blocage (67) étant agencés et dimensionnés de façon à entrer en prise avec le gabarit d'alignement (75) de la préforme (1) lorsque le moyen de transport (33) circule dans la zone des sections de circulation incurvées (41), l'écran de protection d'embouchure (64) étant notamment réalisé en deux parties, chacune de ces deux parties (64a, 64b) présentant l'un des deux évidements (74a, 74b), la partie présentant l'élément de blocage (67) étant notamment logée contre l'autre partie de façon à pouvoir pivoter élastiquement.

5. Dispositif de chauffage (H) selon la revendication 3, **caractérisé en ce que** les éléments de blocage (67) sont logés dans les moyens de fixation (65) de façon à pouvoir pivoter.

6. Dispositif de chauffage (H) selon la seconde alternative de la caractéristique de la revendication 1, **caractérisé en ce que** le dispositif de blocage (45") présente au moins un élément de couplage (44) déplaçable de façon à entrer en prises avec les moyens de transport (33) et assurer le couplage cinématique, ce déplacement étant notamment commandé par cames, le dispositif de blocage (45") étant notamment constitué de deux unités de chaîne (53, 54) verticalement espacées réalisées en couplage cinématique et entre lesquelles passe l'élément d'entraînement (51) à une certaine distance de la chaîne de transport (50).

7. Dispositif de chauffage (H) selon l'une des revendications précédentes, **caractérisé en ce que** les moyens de transport (33) sont réalisés sous forme de mandrins de calage et que des moyens pour desserrer partiellement au moins la force de serrage du mandrin de calage sont prévus dans la zone d'alignement du parcours (55), des guides (71) - notamment des guides se déplaçant avec les moyens de transport et/ou stationnaires - étant agencés dans cette zone sous forme de surfaces d'appui pour les préformes (1) et notamment pour la collerette d'appui (68) des préformes (1).

8. Dispositif de chauffage (H) selon l'une des revendications précédentes, **caractérisé en ce que** les moyens de transport (33) sont réalisés sous forme de mandrins de transport, notamment sous forme de mandrins de calage pouvant être introduits dans la section d'embouchure des préformes (1).

9. Dispositif de chauffage (H) selon l'une des revendications précédentes, **caractérisé en ce que** le corps d'entraînement en rotation (52) est réalisé sous forme de roue dentée et l'élément d'entraînement (51) sous forme de courroie dentée.

10. Dispositif de chauffage (H) selon l'une des revendications précédentes, **caractérisé en ce que** les éléments de blocage (67) sont de conception élastique.

11. Dispositif de chauffage (H) selon l'une des revendications précédentes, **caractérisé en ce que** les éléments de blocage (67) sont déplaçables d'une position d'engagement dans laquelle les éléments de blocage (67) peuvent entrer en prise avec le gabarit d'alignement (75) vers une position de repos dans laquelle les éléments de blocage (67) ne peuvent pas s'engager dans le gabarit d'alignement (75), les éléments de blocage (67) étant notamment réalisés de façon à ce que leur déplacement soit commandé par cames, les deux positions étant notamment des positions de fin de course maintenues par une force de ressort.

12. Machine de soufflage, notamment une machine de soufflage et d'étirage avec un dispositif de chauffage (H) selon l'une des revendications précédentes.
